# EUROPEAN PATENT APPLICATION

(11) **EP 3 470 315 A1**
(43) Date of publication of application: **17.04.2019**
(21) Application number: 17195971.1
(22) Date of filing: 11.10.2017
(51) Int. Cl.: B62K 15/00

(54) **FRAME FOR A FOLDING BICYCLE**

(71) Applicant: Bionx International Corporation, Aurora, Ontario L4G 7A9 (CA)
(72) Inventor: GINGL, Manfred, King City, Ontario L7B 1L9 (CA); Palvölgyi, Sandor, 8200 Ungersdorf/Gleisdorf (AT)
(74) Representative: Weiser & Voith Patentanwälte Partnerschaft

(57) **Abstract**

The present invention relates to a frame (2) for a folding bicycle (1), comprising a front portion (3) with a head tube (7), a rear portion (4) with a mount for an axis (15) of a rear wheel (16), a hinge (5) therebetween for swivelling the frame (2) from a folded position to an unfolded position, and a lock (6) for locking the hinge (5), wherein the hinge (5) includes a shaft (22) with a first and a second end (23, 24), the first end (23) being swivel-mounted to one of the front and the rear portion (3, 4) and the second end (24) being lockable to said one portion (3, 4) by the lock (6), wherein the shaft (22) pivotably mounts the respective other one of the front and the rear portion (3, 4), and wherein said other portion (3, 4) is spring-loaded relative to the shaft (22).

## Description

The present invention relates to a frame for a folding bicycle, comprising a front portion with a head tube for pivotably mounting a headset, a rear portion with a mount for an axis of a rear wheel, a hinge connecting the front and the rear portion for swivelling the frame from a folded position to an unfolded position, and a lock for retaining the hinge in the unfolded position of the frame.

A large variety of frames for folding bicycles are known. A standard folding bicycle has a frame with a vertical hinge for folding the bicycle in the middle between the two wheels and thus achieving substantially congruent wheels in the folded position of the bicycle. US 2015/353160 A1 describes a mechanism folding the frame around a horizontal axis and using a helical cam which offsets the front and rear portion relative to each other upon folding.

Most folding bicycles do not offer the comfort of suspension, while on the other hand, suspension, particularly wheel suspension, is common for non-folding bicycles. Bicycles with suspension mainly use telescopic spring forks with the front wheels, rarely trapezoid link mechanisms. For the rear wheels different kinds of swing arm mechanisms with external helical springs, with or without hydraulic dampers, are common. Other known types of rear wheel suspension include a clock spring (US 6 276 706) or a rubber damping pad (US 6 648 356). In addition, telescopic spring saddle stems and flexible saddles can be found on many bicycles with suspension. Such saddles do not add too much comfort, though.

The reasons for not offering suspension in folding bicycles are the additional weight of the spring suspensions and, of course, the additional cost. Folding bikes are heavier and more expensive per se, due to the folding mechanism. Nevertheless, the transportability is of particular importance for folding bicycles as they are generally more often lifted and carried than other bicycles.

It is an object of the present invention to provide a frame for a folding bike which is lightweight, durable and economic and offers the comfort of suspension.

This objective is achieved with a bicycle frame of the type mentioned above, which is distinguished in that the hinge includes a shaft with a first and a second end, the first end being swivel-mounted to one of the front and the rear portion and the second end being lockable to said one portion by the lock, wherein the shaft is substantially parallel to the axis of the rear wheel in the unfolded position of the frame and pivotably mounts the respective other one of the front and the rear portion, and wherein said other portion is spring-loaded relative to the shaft.

Thereby a light-weight, robust frame for a folding bicycle with suspension is achieved. The shaft serves a dual purpose: it is both part of the folding mechanism and the suspension mechanism and thus minimises the number of moving parts. Due to the placement of the spring-loaded pivotal mount between the front and the rear portion, both portions - and consequently both wheels when mounted to the frame - benefit from the suspension effect. Moreover, this suspension can also be combined with other types of suspension, particularly with a telescopic spring saddle stem and/or a flexible saddle.

Different types of springs or elastic elements known in the art can be used for spring-loading said other portion relative to the shaft. Advantageously, said other portion is spring-loaded by a torsion spring. Such a configuration does not require any complex parts or mounting, hence, it is simple, robust and durable.

In a particularly preferred embodiment, the torsion spring comprises a rigid inner sleeve and a rigid outer sleeve, the inner sleeve being non-rotatably connected to the shaft, the outer sleeve being non-rotatably connected to said other portion of the frame, and the inner and outer sleeves being interconnected via an elastomer element. Such a torsion spring is also known as "silent block" which is available in many different variants. Due to its simple composition it is maintenance-free and very durable. Moreover, the torsion spring with an elastomer element, unlike a metal spring, has progressive spring characteristics and in addition a quite effective dampening due to hysteresis. The spring characteristics may be customised in two ways: by choosing the geometry of the elastomer element, e.g. its size or form, and/or by selecting the material of the elastomer element, e.g. its chemical composition or hardness.

For connecting the inner sleeve non-rotatably to the shaft, the inner sleeve can, e.g., be force-fit or glued to the shaft. Alternatively or additionally the inner sleeve and the shaft can be keyed and non-rotatably connected with a key. Advantageously, the shaft is splined externally and the inner sleeve is correspondingly splined internally for non-rotatably connecting to the shaft. Such a connection is very reliable and robust and allows for connecting the inner sleeve to the shaft in different relative angular positions for adapting to different loads. The smaller the pitch angle of the splines, i.e. the spacing between two adjacent splines, the finer the frame can be adapted to different loads.

In this embodiment, the frame favourably has an angular scale and a corresponding mark, one of which being fixed in relation to the shaft and the other one being fixed in relation to the inner or outer sleeves and both being visible when connecting the inner sleeve to the shaft. Thereby, the relative angular position between the inner sleeve and the shaft can easily be determined during connecting them in the unloaded state of the frame.

To obtain a softer suspension effect, the elastomer element preferably has at least one axial aperture. By distributing two or more such apertures uniformly around the axis of the elastomer element, a concentric twisting of the elastomer element around the axis can be achieved.

In a favourable embodiment, the shaft mounts a first support disc in the vicinity of its first end and a second support disc in the vicinity of its second end, between which support disks the torsion spring is axially held. By axially holding the torsion spring the frame gains additional rigidness; nevertheless, the comfort of suspension can further be increased by using a softer torsion spring.

To allow for a complete disassembly of the frame of the bicycle, it is advantageous when the second support disk is detachably mounted by the shaft. In a preferred embodiment thereof, the shaft has a threaded second end and the second support disc has a correspondingly threaded axial bore. Consequently, it is not only possible to disassemble the frame but also to variably adjust the clearance between the second support disk and the tension spring and, when the tension spring is axially movable on the shaft, between both support disks and the torsion spring.

For holding the torsion spring smoothly and durably, it is favourable that between the torsion spring and each of the support discs a respective sliding ring is interposed. Depending on the respective material combination the sliding rings help to reduce wear of the bicycle frame and noise when riding. Moreover, lubrication can be saved.

A very simple, robust hinge having only few components can be achieved, when the first end of the shaft holds a pin which projects into a pin joint formed on said one portion. For achieving a space saving hinge, it is advantageous when the axis of the pin and the axis of the shaft orthogonally intersect each other.

The lock can be of any type known in the art. Preferably, the lock comprises a lever mounted to said one portion and a catch element mounted to the lever and engageable with the second end of the shaft, wherein the lever has an open position for releasing the catch element from the second end, and a locked position for retaining, via the catch element, the shaft of the hinge in the unfolded position of the frame. Such a lock can easily be operated and still applies the necessary force to the second end for securely and permanently retaining the hinge in the unfolded position of the frame. Moreover, this configuration is space saving when in the locked position and, hence, hardly or not at all affects the movement of the cyclist.

In a favourable variant thereof, the catch element has a hook with a semi-spherical end and the second end of the shaft has a recess for receiving the end of the hook. Such an arrangement can easily be achieved and ensures that the hook rolls consistently in the recess while locking the second end, whereby any force applied thereto is always well-directed.

To ensure an accurate alignment of the front and the rear portion of the frame, the lock preferably comprises a stopper, against which the second end rests when the frame is in the unfolded position. In a favourable variant thereof, the second support disc has a rim with an outer surface following a frustum of a cone which has its apex in the centre of swivel of the shaft, for resting against the stopper. Hence, the force applied between the front and the rear portion of the frame is well distributed between the hinge and the lock. The wear of the frame and the folding mechanism can thereby be further reduced.

The invention will now be described in further detail by means of an exemplary embodiment thereof under reference to the enclosed drawings, in which:
Figs. 1a to 1c show a folding bicycle with a frame according to the present invention in an unfolded position in a side view from the left (Fig. 1a) and the right (Fig. 1b) and in a folded position in a perspective view from above (Fig. 1c);
Figs. 2a to 2c show a section of the frame of Fig. 1 in a side view from the left (Fig. 2a), in a longitudinal section along A-A in Fig. 2a (Fig. 2b) and in a cross section along B-B in Fig. 2a (Fig. 2c);
Fig. 3 shows a variant of a torsion spring for the frame of Fig. 1 in a perspective view at an angle from above;
Figs. 4a and 4b show a section of one portion of the frame of Fig. 1 with a hinge, a shaft and a locker (Fig. 4a) separated from a section of the respective other portion of the frame of Fig. 1 with the torsion spring of Fig. 3 (Fig. 4b) in a perspective view at an angle from above, respectively;
Fig. 5 shows the shaft of Fig. 4a in a perspective view at an angle from above; and
Fig. 6 shows the section of the frame of Fig. 2a in a side view from the right.

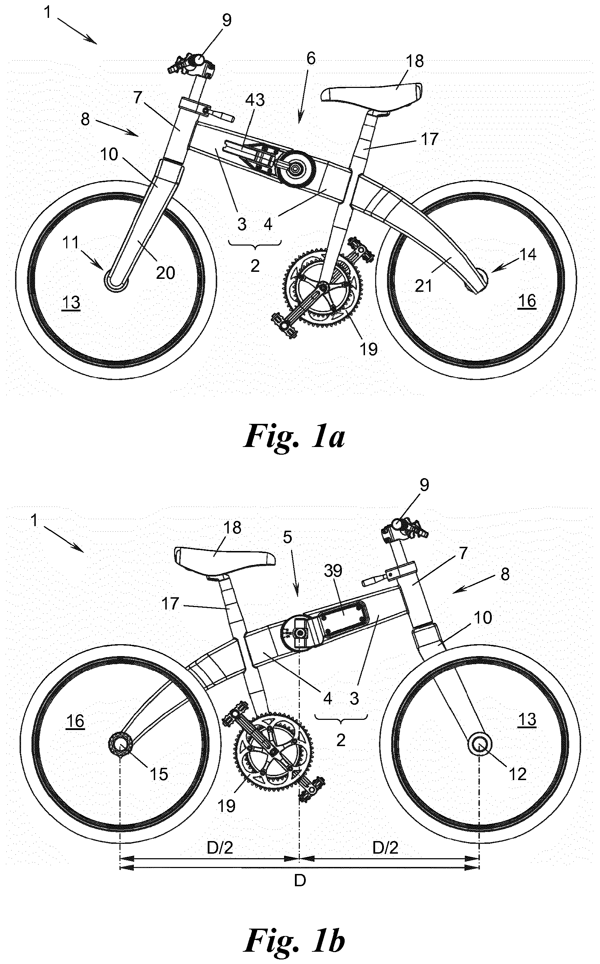

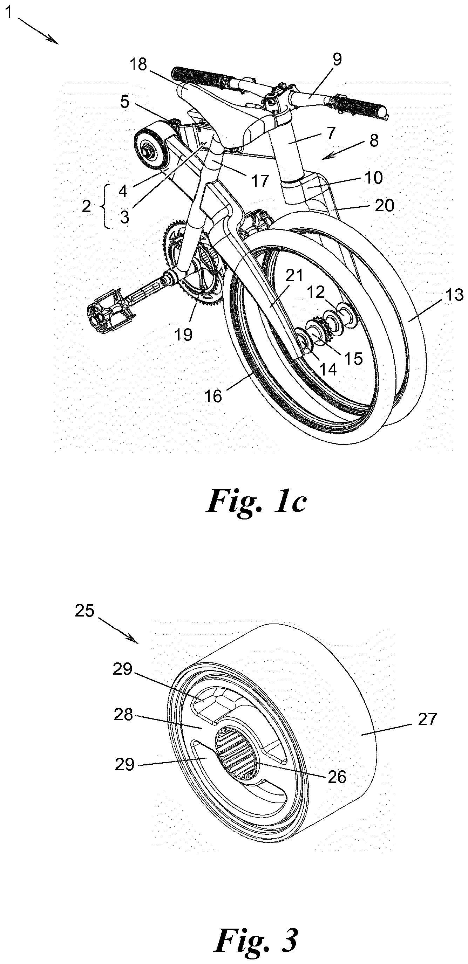

Figs. 1a to 1c show a folding bicycle 1 with a frame 2 which comprises a front portion 3 and a rear portion 4. The front portion 3 and the rear portion 4 are connected using a hinge 5 (Fig. 1b) for swivelling the frame 2 from a folded position (Fig. 1c) to an unfolded position (Figs. 1a and 1b). For retaining the hinge 5 in the unfolded position of the frame 2, the frame 2 further comprises a lock 6 (Fig. 1a).

The front portion 3 of the frame 2 has a head tube 7, in which a headset 8 of the bicycle 1 is pivotably mounted. The headset 8 comprises a handlebar 9 and a fork 10 with a mount 11 for an axis 12 of a front wheel 13. The rear portion 4 of the frame 2 has a mount 14 for an axis 15 of a rear wheel 16. In the example of Figs. 1a to 1c the rear portion 4 has a support 17 for a saddle 18 and a crankset 19. Further accessories, like brakes, chain etc., are not shown for visability reasons.

It shall be understood that support 17, saddle 18 and/or crankset 19 are optional, depending on the type of folding bicycle 1. Moreover, the front and rear portions 3, 4 of the frame 2 can differ from the singular flat tube shell type in the present example: Any tubular metal or composite shell type of frame can be used; moreover, at least one portion 3, 4 of the frame 2 optionally has multiple tubes welded or glued to a polygonal sub-frame. The front fork 10 and/or rear portion 4 may be conventionally forked with two arms mounting the axis 12, 15 of the front and/or rear wheels 13, 16 in between, or are of one-legged type with a single arm 20, 21 for each wheel 13, 16 as shown in the example of Figs. 1a to 1c.

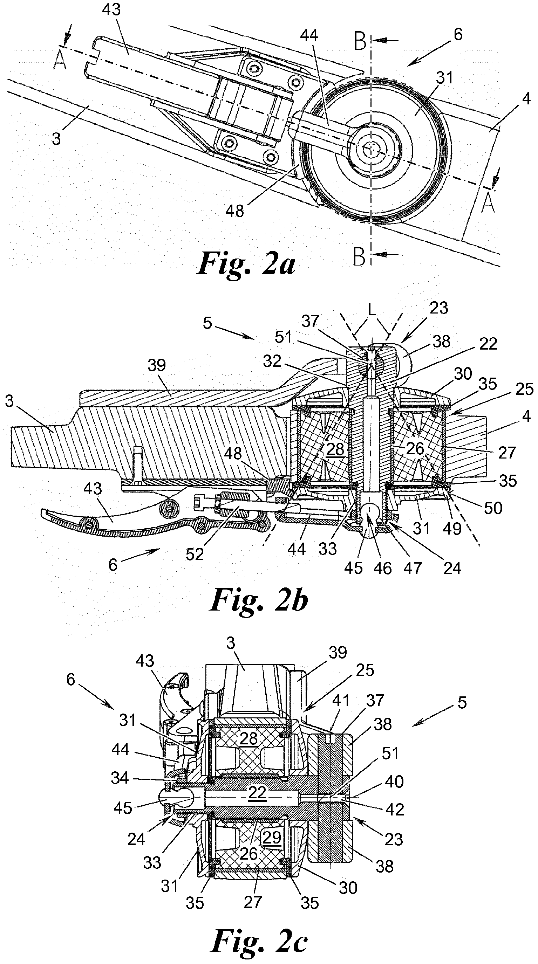

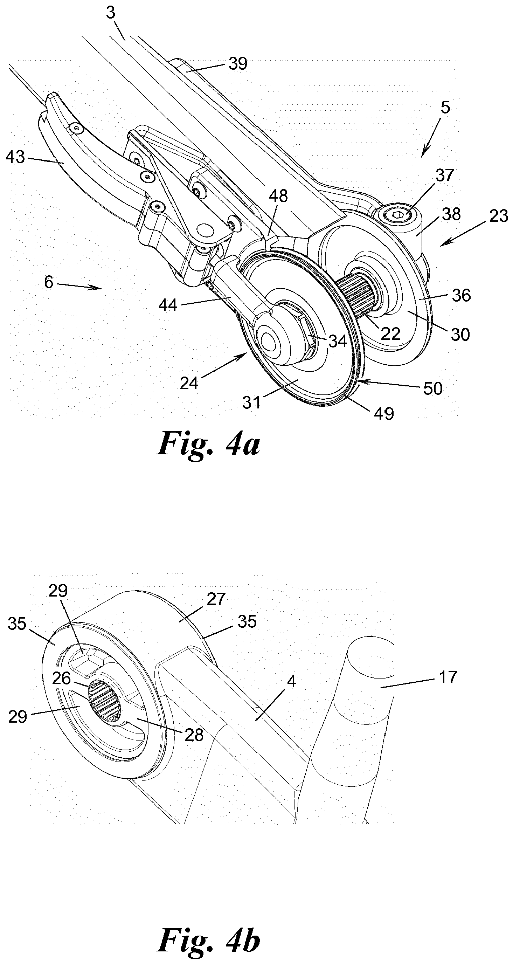

As Figs. 2a to 2c, 4a and 4b show, the hinge 5 includes a shaft 22 which has a first end 23 and a second end 24. The first end 23 is swivel-mounted to the front portion 3 of the frame 2. The second end 24 is releasably locked to the front portion 3 by the lock 6. The shaft 22 is substantially parallel to the axis 15 of the rear wheel 16 in the unfolded position of the frame 2. Moreover, the shaft 22 pivotably mounts the rear portion 4, wherein the rear portion 4 is spring-loaded relative to the shaft 22.

Instead of being swivel-mounted and locked to the front portion 3, the first end 23 and the second end 24 of the shaft 22 can respectively be swivel-mounted and locked to the rear portion 4 while the shaft 22, in this case, pivotably mounts the front portion 3 of the frame 2 in a spring-loaded manner. This applies to all embodiments described herein.

Coming back to the exemplary embodiment of Figs. 2a to 2c, the rear portion 4 is spring-loaded relative to the shaft 22 by a torsion spring 25. Alternatively, a helical spring can be spanned between the rear portion 4 and the shaft 22, or a metal clock spring can be connected to the shaft 22 alongside a bearing for the rear portion 4 (not shown). Moreover, the torsion spring 25 can itself connect the shaft 22 with the rear portion 4, e.g. as a clock spring, and also serve as a bearing.

Fig. 3 shows a detail of the torsion spring 25 of Figs. 2a to 2c, wherein the torsion spring 25 comprises a rigid inner sleeve 26 and a rigid outer sleeve 27. The inner sleeve 26 is non-rotatably connected to the shaft 22 and the outer sleeve 27 is non-rotatably connected to the rear portion 4 of the frame 2 (Fig. 4b), and the inner and outer sleeves 26, 27 are interconnected via an elastomer element 28. Such torsions springs 25 are also known as "silent blocks" which are available in different sizes, materials and/or hardness; thus the characteristics of the torsion spring 25 can be adapted to the specific requirement. Moreover, the characteristics can be changed by having one or more axial apertures 29 in the elastomer element 28, which apertures 29 are optionally equally distributed around the shaft 22 (Fig. 3) and may or may not penetrate the elastomer element 28 completely in its axial direction.

The inner sleeve 26 can, e.g., be glued to the shaft 22; alternatively, a releasable connection can be provided, e.g. both the shaft 22 and the inner sleeve 26 are keyed and connected with a key. In the present example, however, the shaft 22 is splined externally and the inner sleeve 26 is correspondingly splined internally for non-rotatably connecting to the shaft 22, as will be exemplified in more detail below.

As depicted in Fig. 4a, the shaft 22 mounts an optional first support disc 30 in the vicinity of its first end 23 and an optional second support disc 31 in the vicinity of its second end 24. Between the first and second support disks 30, 31, the torsion spring 25 (here: the outer sleeve 27 thereof) is axially held in both directions. The first support disk 30, in this example, rests on a shoulder 32 of the shaft 22 (Fig. 2b) which inhibits a movement towards the first end 23. Optionally, the second support disk 31 is detachably mounted by the shaft 22. Of course, also the first support disk 30 may be detachable from the shaft 22, e.g., after detaching of the second support disk 31 and the torsion spring 25 over the second end 24.

In the example shown in Figs. 2a to 2c and 4a, the shaft 22 has a threaded second end 24 for detachably mounting the second support disk 31 and the second support disc 31 has a correspondingly threaded central axial bore 33. Moreover, an additional counter nut 34 may secure the second support disk 31 in position. Other ways of mounting the support disks 30, 31 are well known to the skilled person and include non-detachable mounting, e.g. by welding or gluing.

Between the torsion spring 25 and each of the support discs 30, 31 a respective sliding ring 35 is interposed in an optional embodiment. The sliding rings 35 can be attached to the torsion spring 25 as in the example of Figs. 2b, 2c and 4b, wherein the support disks 30, 31 may have a respective sliding surface 36 for contact of the sliding rings 35; alternatively the sliding rings can be attached to the support disks 30, 31 for slidingly supporting the torsion spring 25, e.g. at its outer sleeve 27, or be mounted to the shaft 22 between the torsion spring 25 and the support discs 30, 31.

The hinge 5 can be of any type known in the art. In the present example, the first end 23 of the shaft 22 holds a pin 37. The pin 37 projects into a pin joint 38 which is formed on the front portion 3 of the frame 2 (Figs. 2b and 4a). The pin joint 38, in this example, is formed by means of a wing 39 of the front portion 3 attached thereto and, if necessary for swivelling the frame 2 when folding the bicycle 1, laterally projects slightly from the front portion 3.

In the present example, the pin 37 orthogonally intersect the shaft 22, wherein the axis 40 of the shaft 22 and the axis 41 of the pin 37 orthogonally intersect each other, as Figs. 2b and 2c show. In this case, the pin 37 is fixed to the shaft 22 by an axial screw 42 in the shaft 22. Therefor, the pin 37 is inserted into and secured to the shaft 22, when the shaft 22 is already in place. However, the relative position of the pin 37 and the shaft 22 can be chosen differently as well as the way of holding the pin 37 by the shaft 22.

The lock 6 can be of a variety of types, e.g. a cam lock, a latch, a turn buckle or any other quick release mechanism. In the example of Figs. 2b and 4a, the lock 6 comprises a lever 43 pivotably mounted to the front portion 3 and a catch element 44 that is mounted to the lever 43. The mount of the front portion 3 and the mount of the catch element 44 are spaced from each other on the lever 43, such that the lever 43, when pivoted, tensions the catch element 44.

The catch element 44 can be engaged with the second end 24 of the shaft 22. In the example shown in Figs. 2b and 2c, the catch element 44 has a hook 45 with a semi-spherical end 46 and the second end 24 of the shaft 22 has a recess 47, e.g. an axial bore, for receiving the end 46 of the hook 45. Instead of the hook 45, the catch element 44 could, e.g., have a lug for catching the second end 24 of the shaft 22 or an undercut thereon (not shown). Thus, the lever 43 has an open position for releasing the catch element 44 from the second end 24 (not shown), and a locked position for retaining, via the catch element 44, the shaft 22 of the hinge 5 in the unfolded position of the frame 2.

The lock 6 further comprises an optional stopper 48, against which the second end 24 of the shaft 22 rests when the frame 2 is in the unfolded position. As depicted by the dashed lines L in Fig. 2b, the second support disc 31 optionally has a rim 49 with an outer surface 50 following a frustum of a cone which has its apex in the centre of swivel 51 of the shaft 22, for resting against the stopper 48.

Optionally, the catch element 44 can be mounted to the lever 43 via an adjustable connector 52 (Fig. 2b).

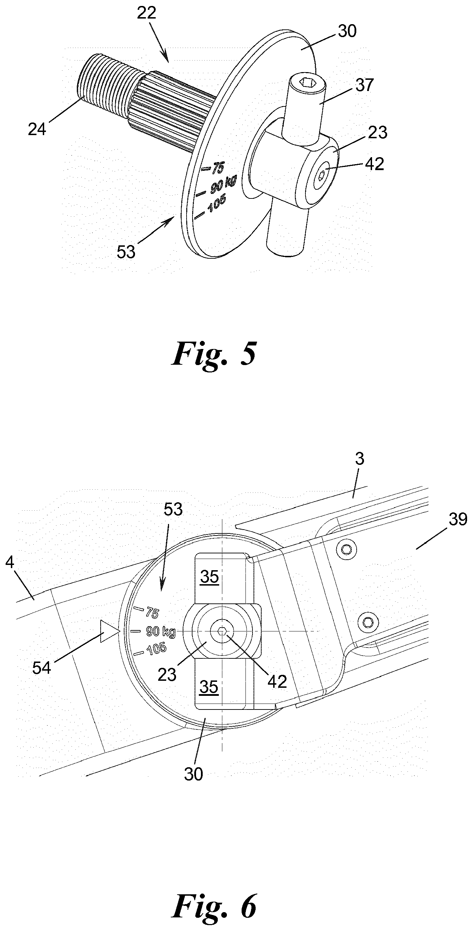

As illustrated in Figs. 5 and 6, the shaft 22 is splined externally and the inner sleeve 26 is correspondingly splined internally. Here, the shaft 22 can be inserted into the inner sleeve 26 in different angular positions relative thereto which are determined by the splines' pitch angle. It is therefore possible to pretension the frame 2 upon assembling the front and rear portions 3, 4. As an optional aid, an angular scale 53 is provided, e.g., on the first support disk 30, which is fixed in relation to the shaft 22, and a corresponding mark 54 is provided on the rear portion 4 of the frame, which is fixed in relation to the outer sleeve 27. Alternatively, the mark 54 or, when the scale 53 and the mark 54 are interchanged, the scale 53 can be fixed in relation to the inner sleeve 26. However, both the scale 53 and the mark 54 are arranged on the frame 2 such that they are visible when connecting the inner sleeve 26 to the shaft 22. Thereby, a certain rider's weight can be preset by selecting the desired angular relation between the front and the rear portions 3, 4 of the frame 2.

Moreover, the pin 37 can optionally be aligned to be substantially vertical in the upright position of the bicycle 1 (Figs. 1b, 1c and 6), such that, when folding the bicycle 1, the front wheel 13 and the rear wheel 14 stay in the same plane. When, as in the example of Fig. 1b, the axis 41 of the pin 37 additionally divides a distance D between the front and the rear wheels axis 12, 15 in half (D/2), both wheels 13, 16 are congruent in the folded position of the bicycle 1 as shown in Fig. 1c.

The invention is not limited to the embodiments described in detail above, but encompasses all variants, modifications and combinations thereof which will become apparent to the person skilled in the art from the present disclosure and which fall into the scope of the appended claims.

## Claims

1. Frame for a folding bicycle, comprising
a front portion (3) with a head tube (7) for pivotably mounting a headset (8),
a rear portion (4) with a mount for an axis (15) of a rear wheel (16),
a hinge (5) connecting the front and the rear portion (3, 4) for swivelling the frame (2) from a folded position to an unfolded position, and
a lock (6) for retaining the hinge (5) in the unfolded position of the frame (2),
**characterised in that**
the hinge (5) includes a shaft (22) with a first and a second end (23, 24), the first end (23) being swivel-mounted to one of the front and the rear portion (3, 4) and the second end (24) being lockable to said one portion (3, 4) by the lock (6),
wherein the shaft (22) is substantially parallel to the axis (15) of the rear wheel (16) in the unfolded position of the frame (2) and pivotably mounts the respective other one of the front and the rear portion (3, 4), and
wherein said other portion (3, 4) is spring-loaded relative to the shaft (22).

2. Frame according to claim 1, **characterised in that** said other portion (3, 4) is spring-loaded by a torsion spring (25) .

3. Frame according to claim 2, **characterised in that** the torsion spring (25) comprises a rigid inner sleeve (26) and a rigid outer sleeve (27), the inner sleeve (26) being non-rotatably connected to the shaft (22), the outer sleeve (27) being non-rotatably connected to said other portion (3, 4) of the frame (2), and the inner and outer sleeves (26, 27) being interconnected via an elastomer element (28).

4. Frame according to claim 3, **characterised in that** the shaft (22) is splined externally and the inner sleeve (26) is correspondingly splined internally for non-rotatably connecting to the shaft (22).

5. Frame according to claim 4, **characterised by** an angular scale (53) and a corresponding mark (54), one of which being fixed in relation to the shaft (22) and the other one being fixed in relation to the inner or outer sleeves (26, 27) and both being visible when connecting the inner sleeve (26) to the shaft (22).

6. Frame according to any one of the claims 3 to 5, **characterised in that** the elastomer element (28) has at least one axial aperture (29).

7. Frame according to any one of the claims 2 to 6, **characterised in that** the shaft (22) mounts a first support disc (30) in the vicinity of its first end (23) and a second support disc (31) in the vicinity of its second end (24), between which support disks (30, 31) the torsion spring (25) is axially held.

8. Frame according to claim 7, **characterised in that** the second support disk (31) is detachably mounted by the shaft (22) .

9. Frame according to claim 8, **characterised in that** the shaft (22) has a threaded second end (24) and the second support disc (31) has a correspondingly threaded axial bore (33).

10. Frame according to any one of the claims 7 to 9, **characterised in that** between the torsion spring (25) and each of the support discs (30, 31) a respective sliding ring (35) is interposed.

11. Frame according to any one of the claims 1 to 10, **characterised in that** the first end (23) of the shaft (22) holds a pin (37) which projects into a pin joint (38) formed on said one portion (3, 4).

12. Frame according to claim 11, **characterised in that** the axis (41) of the pin (37) and the axis (40) of the shaft (22) orthogonally intersect each other.

13. Frame according to any one of the claims 1 to 12, **characterised in that** the lock (6) comprises a lever (43) mounted to said one portion (3, 4) and a catch element (44) mounted to the lever (43) and engageable with the second end (24) of the shaft (22), wherein the lever (43) has an open position for releasing the catch element (44) from the second end (24), and a locked position for retaining, via the catch element (44), the shaft (22) of the hinge (5) in the unfolded position of the frame (2).

14. Frame according to claim 13, **characterised in that** the catch element (44) has a hook (45) with a semi-spherical end (46) and the second end (24) of the shaft (22) has a recess (47) for receiving the end (46) of the hook (45).

15. Frame according to any one of the claims 1 to 14, **characterised in that** the lock (6) comprises a stopper (48), against which the second end (24) rests when the frame (2) is in the unfolded position.

16. Frame according to claim 15 and any one of the claims 7 to 10, **characterised in that** the second support disc (31) has a rim (49) with an outer surface (50) following a frustum of a cone which has its apex in the centre of swivel (51) of the shaft (22), for resting against the stopper (48).
